Europäisches Patentamt

European Patent Office

Office européen des brevets

(19)

(11) Publication number: **0 219 149**
**B1**

# EUROPEAN PATENT SPECIFICATION

(12)

(45) Date of publication of the patent specification:
09.05.90

(21) Application number: 86201528.6

(22) Date of filing: 05.09.86

(51) Int. Cl.⁵: **G01L 5/00, G01L 1/16**

(54) System for determining the pressure in the nip between two rollers.

(30) Priority: 11.09.85 NL 8502475

(43) Date of publication of application:
22.04.87 Bulletin 87/17

(45) Publication of the grant of the patent:
09.05.90 Bulletin 90/19

(84) Designated Contracting States:
DE FR GB NL

(56) References cited:
EP-A- 0 091 089
DE-A- 2 653 556
FR-A- 2 351 722
US-A- 3 418 850
US-A- 4 016 756
US-A- 4 499 394

PATENTS ABSTRACTS OF JAPAN, vol. 8,
no. 211 (P-303)[1648], 26th September 1984; &
JP-A-59 94 028
ELECTRONIC DESIGN, vol. 31, no. 11, 26th May 1983,
page 77e, Rochelle Park, New York, US; R. ALLAN:
"Piezo polymer promises low-cost robotic sensors"

(73) Proprietor: Océ-Nederland B.V., St. Urbanusweg 43,
NL-5914 CC Venlo(NL)

(72) Inventor: Hermkens, Gerardus Antonius Josephus, Op
de Peelberg 23, NL-6049 EW Herten(NL)

(74) Representative: Hanneman, Henri W.A.M.,
Océ-Nederland B.V. Patents and Information
Postbus 101, NL-5900 MA Venlo(NL)

## Description

The invention relates to a system and sensor for determining the pressure which is exerted on an object which is passed between two rollers, at least one of which is provided with a relatively hard core having a resilient cladding.

In devices in which paper, films or other relatively thin sheet-like materials are conveyed, such as in printing presses, copying machines and the like, use is frequently made of combinations of rollers pressed against each other between which the paper, film and the like are passed. In general, at least one of the rollers is provided with a resilient outer layer, for example of rubber.

In the conveyance of paper by means of such roller combinations a uniform constant pressure distribution in the nip between the rollers parallel to the centre lines of the rollers is important. If the pressure near the shaft ends is, for example, higher than at the centre, then the resilient material of the outer layer will be compressed more at the ends than at the centre. The result thereof is a local increase of the speed of the said resilient material and consequently a local increase of the speed with which the paper is conveyed between the rollers. As a result the paper may be folded or even start to tear. If the paper is introduced asymmetrically between the rollers, then the non-uniform pressure distribution will result in the paper running askew, which in most cases is very undesirable.

There is therefore a need for means with which the pressure which is exerted on the paper, film and the like during conveyance through a roller combination can be determined locally in order to be able to optimise the adjustment of the rollers on the basis thereof.

The invention therefore provides a system for determining the pressure which is exerted on an object which is passed between two rollers, at least one of which is provided with a relatively hard core having a resilient cladding, characterised by

a) a sensor of pressure-sensitive material consisting of a laminated film comprising in sequence
– a first layer of electrically conducting material,
– a layer of polyvinylidene fluoride,
– a second layer of electrically conducting material,
– a layer of dielectric material,
– a third layer of electrically conducting material,
there being present in the second layer of conducting material at least one detector region which makes no electrical contact with the part of the layer situated around it,
b) a transmission/receiving device provided with
– means for presenting a transmission pulse to said at least one detector region of the sensor placed between the two rollers via at least on line connected to the respective detector region, the first and third electrically conducting layers and the said surrounding part of the second layer being earthed, in order to generate an ultrasonic wave in the sensor,

– means for detecting the electrical field which is generated in the sensor by the ultrasonic wave reflected against the roller core,
– means for determining the time interval between the transmission pulse and the receiving pulse in order to be able to determine therefrom the instantaneous thickness of the resilient cladding and, on the basis thereof, the pressure which is exerted on the object.

As will be further discussed in more detail, the layer of polyvinylidene fluoride has piezoelectric properties. By means of the transmission device an electrical pulse is presented to selected detector regions, as a result of which, because of the piezoelectric properties of the polyvinylidene fluoride layer, a vibration is generated in said layer resulting in the emission of an ultrasonic energy pulse. This pulse is coupled into the resilient cladding of the roller on the side of the first layer of electrically conducting material. After propagation through said cladding, the pulse is reflected against the relatively hard roller core, passes back through the cladding and reaches the sensor film, where an electric field which can be detected by the receiving device is generated in the polyvinylidene fluoride layer. From the time difference between transmission pulse and receiving pulse a conclusion can be drawn regarding the local thickness of the resilient cladding and consequently regarding the extent of compression of said cladding, which is related, in its turn, to the pressure which is exerted on the sensor film.

A fundamentally important component of the system according to the invention is formed by the sensor which is used in the system. The invention is therefore directed not only at the system as a whole but also at a sensor for use in said system according to claim 6.

The invention will be explained below in more detail by reference to the accompanying Figures.

Figure 1 represents a partial section through the film material from which the sensor according to the invention is constructed.

Figure 2 represents a plane view of the layer 12 of electrically conducting material in which some detector regions are provided.

Figure 3 shows diagrammatically a combination of rollers in which the system according to the invention is used for determining the pressure which is exerted by the rollers on an object gripped between the rollers.

Before embodiments of the system according to the invention are discussed, the sensor which is used in the system is first dealt with in more detail.

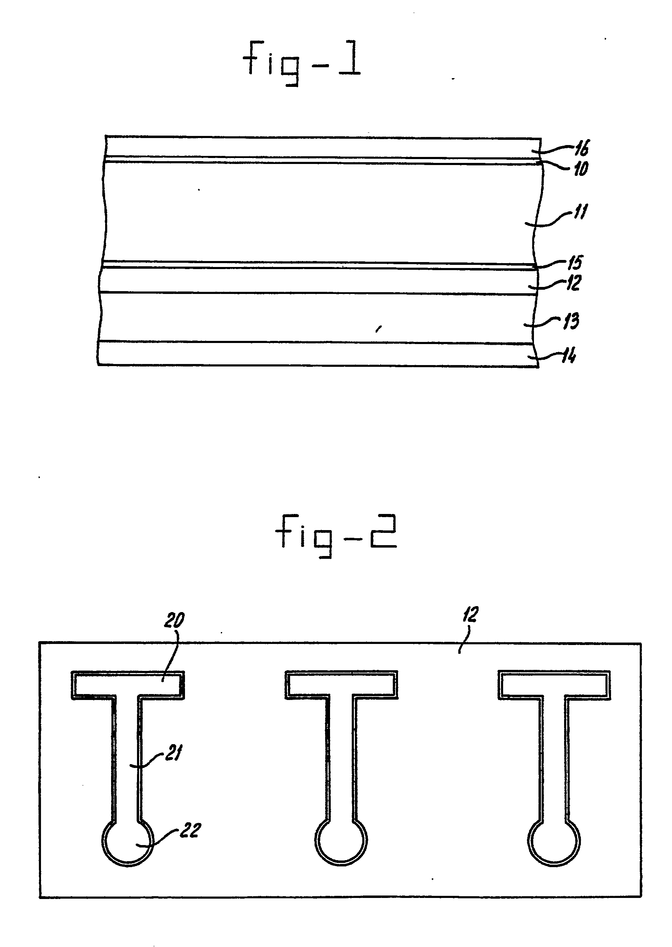

Figure 1 shows a section through a part of a laminated film. As is evident from Figure 1, the film is constructed of a first layer 10 of electrically conducting material, which layer is situated on a layer 11 of polyvinylidene fluoride. Said layer 22 is attached via an adhesive layer 15 to a second layer 12 of electrically conducting material. Said layer 12 is situated on a layer 13 of dielectric material, the other surface of which is covered by a third layer 14 of electrically conducting material. Finally, there is disposed at the top a further layer 16 of flexible material such as silicone rubber.

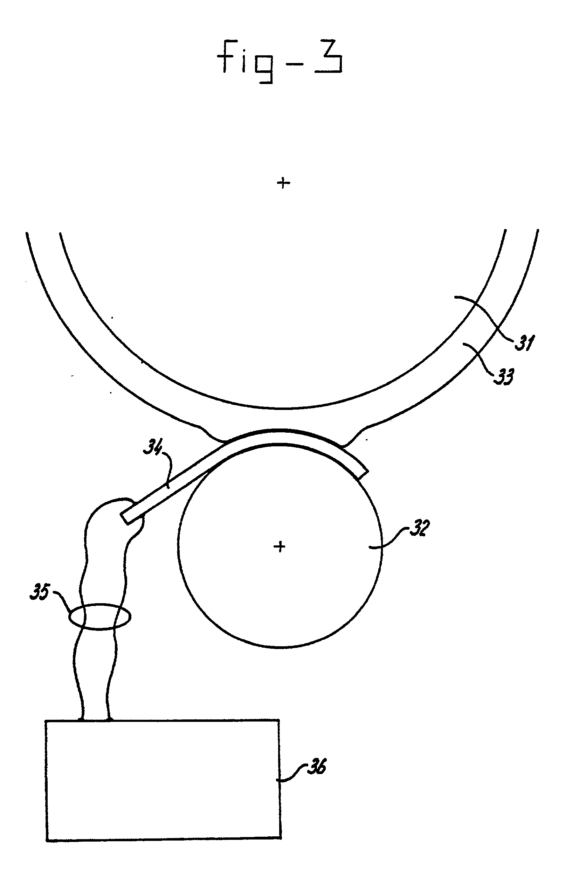

Figure 2 shows a plan view of the layer 12 of electrically conducting material. This layer is provided with a number of detector regions which each consist of an elongated region 20 and a conductor region 21 adjoining approximately perpendicular thereto which is connected at its other end to the connection region 22. Each of these essentially T-shaped detector regions is separated by a small gap from the remaining part of the layer 12. All the elongated regions 20 lie in a line on a strip of the layer 12, which strip is gripped between the rollers during the use of the film.

The operation of the sensor is based on the properties of the layer 11 of polyvinylidene fluoride and said properties will be discussed below.

Polyvinylidene fluoride, abbreviated in the literature to PVDF or $PVF_2$, is a semi-crystalline polymer. The material is readily manufactured in the forms of a film and has, in addition to crystalline properties, also amorphous properties such as flexibility and unbreakability. The film consists of C chains with H and F branches. The H and F atoms provide a dipole moment. These dipoles can be aligned at elevated temperature (approx. 70°C) by stretching the film and applying an electric field. If said dipoles are aligned and subsequently "frozen-in", then the film exhibits piezoelectric properties. The internal dipoles are compensated for at the surface of the film.

If the film is now compressed in the thickness direction as a result of an external pressure, then the internal dipoles will become less oriented and the dipole moment will decrease because the lattice distances are compressed. The result is that the compensation charge has to be removed and this can be detected externally.

If, on the other hand, the compensation charge is disturbed by the presentation of an external electric field, then this will result in a mechanical compression/expansion of the film, which offers the possibility of generating an ultrasonic pulse by means of a high frequency electric field.

In the configuration of Figures 1 and 2 the layer 11 of polyvinylidene fluoride with the first electrically conducting layer 10 at the top and the second electrically conducting layer 12 at the bottom is in fact used for the piezoelectric conversion.

During use the layer 10 is earthed. The connection regions of the detector regions of the layer 12 are connected to suitable measuring instruments and the remaining part of the layer 12 is earthed. If a pressure is then exerted on the film, as a result of which the film is deformed in the thickness direction locally, in particular at the position of the elongated regions 20 of the detector regions, then this mechanical deformation will bring about an electric charge displacement which can be detected via the measuring instruments connected to the detector regions.

If on the other hand a high-frequency field is applied across the layer 11 via the detector regions, as a reaction thereto there will be generated in the layer 11 an ultrasonic wave which in principle is emitted both upwards and downwards.

The ultrasonic vibration emitted towards the bottom in Figure 1 is damped by the further layers of the film assembly present there. In the layers 12, 13, 14 acoustic energy is virtually completely absorbed. If the layers 12, 14 are manufactured from copper and if the layer 13 is manufactured from Kapton (Trade Mark from DuPont Nemours), then only 1% of the signal generated in the layer 11 is transmitted. A further consequence of this damping at the bottom of said film assembly is that the mechanical vibration in the layer 11 decays very rapidly after termination of the activating electric field so that the sensor can be switched over rapidly from transmission to receiving.

Like the uppermost conducting layer 10, the lowermost, third conducting layer 14 is earthed when the film is in use and these layers together form a Faraday cage, as a result of which an effective screening against external interfering effects is obtained.

The layer 16 at the top is manufactured from a material with a low acoustic impedance, for example silicone rubber, with which a good transmission and a good coupling in of the acoustic vibration into the resilient cladding of the roller are obtained.

In Figure 3 an arrangement is shown very diagrammatically of two rollers 31 and 32 with a relatively thin sensor 34 between them. The roller 31 is provided with a hard inflexible core and an outer layer 33 of resilient material such as, for example, rubber. In the example shown, the roller 32 is constructed as a hard roller, but the invention can also be used for two rollers which are both provided with a resilient cladding. The sensor 34 is connected to a measuring apparatus 36 via the lines 35. The lines 35 include signal lines to each of the connection regions 22 of the sensor and also at least one earth line.

The measuring apparatus 36 is a device known per se, for example the ultrasonic test apparatus USIP 12 made by Krautkrämer. By means of said test apparatus an electric high-frequency pulse is transmitted at a predetermined time instant $t_0$ to the sensor 34, as a result of which, in the manner now already described, an ultrasonic vibration is generated by each of the detector regions in the sensor, which vibration is emitted to the roller 31 in Figure 3. As has already been discussed, the ultrasonic vibration at the bottom, in the direction of the roller 32, is damped in the sensor itself. The ultrasonic vibration emitted passes through the resilient cladding 33, is reflected by the hard core of the roller 31 and returns to the sensor 34. The returning ultrasonic vibration ensures that in the sensor 34 an electric pulse, which is fed to the measuring apparatus 36, is generated at time instant $t_1$. In the measuring apparatus 36 the time difference $t_1-t_0$ is determined, which time difference is a measure of the thickness of the resilient cladding 33 in the nip between the rollers 31 and 32. As is indicated diagrammatically in Figure 3, the resilient cladding 33 is somewhat deformed by the presence of the sensor 34. By means of a suitable number of detector regions in the film, it is now possible to determine over the whole width of the nip whether this deformation is uniform or not.

The sensor illustrated in Figures 2 and 3 may be manufactured by fabricating a first part assembly consisting of a dielectric film to which a layer of electrically conducting material is applied on both sides. This first part aasembly then comprises the layers 12, 13 and 14. For the layers 12 and 14 copper is preferably used and for the layer 13 capton is preferably used. However, other conducting materials and other dielectric materials can also be used.

The pattern of the detector regions in the layer 12 can be manufactured by any method suitable therefor. Preferably, however, use is made of an etching process to remove the narrow strips of material between the detector regions and the remaining part of the layer.

A second part assembly is manufactured by providing a polyvinylidene fluoride film with an electrically conducting layer on one side. Said second part assembly then comprises the layers 10 and 11 from Figure 1. The layer 10 of electrically conducting material is preferably manufactured from aluminium, but may also be manufactured from copper or another electrically conducting material. The two part assemblies are then bonded to each other by means of an adhesive layer (15 in Figure 1). The adhesive layer consists, for example, of a solution of 5% Union Carbide 49001. This adhesive is applied at room temperature to the PVDF film by means of a so-called kiss coating. The bonding is then brought about under pressure and temperature (60°C).

The layer 16 of material having a low acoustic damping, for example silicone rubber, is applied during the manufacture of the second part assembly or is applied after the two part assemblies are bonded to each other. In the case of silicone rubber a so-called "air brush" method is preferably used to apply the silicone rubber to the conducting layer 10.

**Claims**

1. System for determining the pressure which is exerted on an object which is passed between two rollers, at least one of which is provided with a relatively hard core having a resilient cladding, characterised by

   a) a sensor of pressure-sensitive material consisting of a laminated film comprising in sequence
      - a first layer of electrically conducting material,
      - a layer of polyvinylidene fluoride,
      - a second layer of electrically conducting material,
      - a layer of dielectric material,
      - a third layer of electrically conducting material,
   there being present in the second layer of conducting material at least one detector region which makes no electrical contact with the part of the layer situated around it,

   b) a transmission/receiving device provided with
      - means for presenting a transmission pulse to said at least one detector region of the sensor,

placed between the two rollers via at least one line connected to the respective detector region, the first and third electrically conducting layers and the said surrounding part of the second layer being earthed, in order to generate an ultrasonic wave in the sensor,
      - means for detecting the electrical field which is generated in the sensor by the ultrasonic wave reflected against the roller core,
      - means for determining the time inverval between the transmission pulse and the receiving pulse in order to be able to determine therefrom the instantaneous thickness of the resilient cladding and, on the basis thereof, the pressure which is exerted on the object.

2. System according to claim 1, characterised in that on the outside of the first layer of electrically conducting material a further layer of a material having a low acoustic impedance is applied.

3. System according to claim 2, characterised in that the further layer consists of silicone rubber.

4. System according to any of the preceding claims, characterised in that the detector regions are constructed of a first relatively elongated region which in the condition of use runs parallel to the nip between the rollers and a second elongated region adjoining perpendicular thereto, the other end of which forms the contact region for the line to the transmission/receiving device.

5. System according to claim 4, characterised in that the sensor is provided with a number of detector regions in a pre-determined pattern, the first elongated regions of all the detector regions being in one line.

6. Sensor for use in a system according to any of claims 1 to 5, characterised by a laminated film which comprises in sequence
   - a first layer of electrically conducting material,
   - a layer of polyvinylidene fluoride,
   - a second layer of electrically conducting material, in which layer at least one detector region is present which makes no electrical contact with the part of the layer situated around it, which detector region consists of a first elongated region and of a conductor region which runs approximately essentially perpendicular thereto and which leads to a connection region,
   - a layer of dielectric material,
   - a third layer of electrically conducting material.

7. Sensor according to claim 6, characterised in that at the outside of the first layer of conducting material a further layer of a material having a low acoustic impedance is applied.

**Patentansprüche**

1. System zur Bestimmung des Druckes, der auf ein zwischen zwei Walzen hindurchgeführtes Objekt ausgeübt wird, wobei wenigstens eine der Walzen einen relativ harten Kern und eine nachgiebige Ummantelung aufweist, gekennzeichnet durch
      a) einen Sensor aus drucksensitivem Material, bestehend aus einem Film mit einer Schichtstruktur, die der Reihe nach die folgenden Schichten enthält

– eine erste Schicht aus elektrisch leitendem Material,

– eine Schicht aus Polyvinylidenfluorid,

– eine zweite Schicht aus elektrisch leitendem Material,

– eine Schicht aus dielektrischem Material,

– eine dritte Schicht aus elektrisch leitendem Material, wobei in der zweiten Schicht aus leitendem Material wenigstens ein Detektorgebiet vorhanden ist, das mit dem umgebenden Teil der Schicht nicht in elektrischem Kontakt steht,

b) eine Sende/Empfangs-Einrichtung mit

– Mitteln zum Zuführen eines Sendeimpulses an das wenigstens eine Detektorgebiet des Sensors, das sich zwischen den beiden Walzen befindet, über wenigstens eine mit dem betreffenden Detektorgebiet verbundene Leitung, wobei die erste und die dritte elektrisch leitende Schicht und der umgebende Teil der zweiten Schicht geerdet sind, um eine Ultraschallwelle in dem Sensor zu erzeugen,

– Mitteln zum Abfühlen des elektrischen Feldes, das durch die an dem Kern der Walze reflektierte Ultraschallwelle in dem Sensor erzeugt wird,

– Mitteln zur Bestimmung des Zeitintervalls zwischen dem Sendeimpuls und dem Empfangsimpuls, um hieraus die augenblickliche Dicke der nachgiebigen Ummantelung und anhand dieser den auf das Objekt wirkenden Druck bestimmen zu können.

2. System nach Anspruch 1, dadurch gekennzeichnet, daß auf der Außenfläche der ersten Schicht aus elektrisch leitendem Material eine weitere Schicht aus einem Material mit einer niedrigen akustischen Impedanz angebracht ist.

3. System nach Anspruch 2, dadurch gekennzeichnet, daß die weitere Schicht aus Silikongummi besteht.

4. System nach einem der vorstehenden Ansprüche, dadurch gekennzeichnet, daß die Detektorgebiete gebildet werden durch ein erstes relativ langgestrecktes Gebiet, das bei Benutzung des Sensors parallel zu dem zwischen den Walzen gebildeten Klemmspalt verläuft, und ein rechtwinklig an dieses Gebiet angrenzendes zweites langgestrecktes Gebiet, dessen anderes Ende die Kontaktzone für die Leitung zu der Sende/Empfangs-Einrichtung bildet.

5. System nach Anspruch 4, dadurch gekennzeichnet, daß der Sensor eine Anzahl in einem vorgegebenen Muster angeordneter Detektorgebiete aufweist, deren erste langgestreckte Gebiete sämtlich in einer Linie ausgerichtet sind.

6. Sensor zur Verwendung in einem System nach einem der Ansprüche 1 bis 5, gekennzeichnet durch einen Film mit einer Schichtstruktur, die der Reihe nach die folgenden Schichten enthält

– eine erste Schicht aus elektrisch leitendem Material,

– eine Schicht aus Polyvinylidenfluorid,

– eine zweite Schicht aus elektrisch leitendem Material, in der wenigstens ein Detektorgebiet vorhanden ist, das mit dem umgebenden Teil der Schicht nicht in elektrischem Kontakt steht, wobei das Detektorgebiet aus einem ersten langgestreckten Gebiet und einem im wesentlichen rechtwinklig hierzu verlaufenden leitenden Gebiet besteht, das zu einer Kontaktzone führt,

– eine Schicht aus dielektrischem Material,

– eine dritte Schicht aus elektrisch leitendem Material.

7. Sensor nach Anspruch 6, dadurch gekennzeichnet, daß auf der Außenfläche der ersten Schicht aus leitendem Material eine weitere Schicht aus einem Material mit einer niedrigen akustischen Impedanz angebracht ist.

**Revendications**

1. Dispositif permettant de déterminer la pression qui est exercée sur un object qu'on fait passer entre deux cylindres dont au moins l'un comporte un noyau relativement dur présentant un revêtement élastique, caractérisé par:

a) un capteur en matériau sensible à la pression, constitué d'un film stratifié comprenant successivement:

– une première couche de matériau électriquement conducteur,

– une couche de fluorure de polyvinylidène,

– une deuxième couche de matériau électriquement conducteur,

– une couche de matériau diélectrique,

– et une troisième couche de matériau électriquement conducteur,

la deuxième couche de matériau conducteur comportant au moins une zone de détection qui ne réalise pas de contact électrique avec la partie de la couche l'entourant, et

b) un dispositif d'émission/réception comportant:

– des moyens servant à présenter une impulsion d'émission à l'au moins une zone de détection du capteur, qui est placé entre les deux cylindres, par l'intermédiaire d'au moins une ligne reliée à la zone considérée de détection, les première et troisième couches électriquement conductrices et la partie d'entourage de la deuxième couche étant mises à la masse, afin de produire une onde ultrasonore dans le capteur,

– des moyens servant à détecter le champ électrique qui est produit dans le capteur par l'onde ultrasonore réfléchie sur le noyau du cylindre,

– et des moyens servant à déterminer la différence de durée entre l'impulsion d'émission et l'impulsion de réception, afin de pouvoir déterminer, à partir de cette différence, l'épaisseur instantanée du revêtement élastique et, sur la base de celui-ci, la pression qui est exercée sur l'objet.

2. Dispositif suivant la revendication 1, caractérisé en ce qu'une autre couche en un matériau possédant une faible impédance acoustique est appliquée sur la face extérieure de la première couche de matériau électriquement conducteur.

3. Dispositif suivant la revendication 2, caractérisé en ce que l'autre couche est constituée de caoutchouc de silicone.

4. Dispositif suivant l'une quelconque des revendications précédentes, caractérisé en ce que les zones de détection sont formées d'une première zone relativement allongée qui, dans la situation d'utilisation, s'étend parallèlement à l'intervalle de pincement existant entre les cylindres, et d'une seconde zone allongée qui est contiguë à la première, perpendiculairement à elle, et dont l'autre extrémité forme la zone de contact prévu pour la ligne conduisant au dispositif d'émission/réception.

5. Dispositif suivant la revendication 4, caractérisé en ce que le capteur est pourvu d'un certain nombre de zones de détection disposées suivant un motif fixé à l'avance, les premières zones allongées de toutes ces zones de détection étant disposées suivant une seule ligne.

6. Capteur destiné à être utilisé dans un dispositif suivant l'une quelconque des revendications 1 à 5, caractérisé par un film stratifié comprenant successivement:
   – une première couche de matériau électriquement conducteur,
   – une couche de fluorure de polyvinylidène,
   – une deuxième couche de matériau électriquement couducteur, couche dans laquelle est présente au moins une zone de détection qui ne réalise pas de contact électrique avec la partie de la couche l'entourant, cette zone de détection étant constituée d'une première zone allongée et d'une zone conductrice qui s'étend d'une manière à peu près sensiblement perpendiculaire à la première zone et qui conduit à une zone de connexion,
   – une couche de matériau diélectrique,
   – et une troisième couche de matériau électriquement conducteur.

7. Capteur suivant la revendication 6, caractérisé en ce qu'une autre couche d'un matériau possédant une faible impédance acoustique est appliquée sur la face extérieure de la première couche de matériau conducteur.

fig-1

fig-2

fig - 3